(19) Europäisches Patentamt
European Patent Office
Office européen des brevets

(11) **EP 3 707 468 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(21) Anmeldenummer: **18785342.9**

(22) Anmeldetag: **09.10.2018**

(51) Int Cl.:
*G01C 21/20* (2006.01)    *B61C 17/12* (2006.01)
*B61D 15/00* (2006.01)    *B61L 15/00* (2006.01)
*B61L 23/04* (2006.01)    *B61L 25/02* (2006.01)

(86) Internationale Anmeldenummer:
**PCT/EP2018/077423**

(87) Internationale Veröffentlichungsnummer:
**WO 2019/091681 (16.05.2019 Gazette 2019/20)**

(54) **SYSTEM UND VERFAHREN ZUM NAVIGIEREN INNERHALB EINES GLEISNETZES**

SYSTEM AND METHOD FOR NAVIGATING WITHIN A TRACK NETWORK

SYSTÈME ET PROCÉDÉ DESTINÉS À LA NAVIGATION À L'INTÉRIEUR D'UN RÉSEAU FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2017 AT 4372017**

(43) Veröffentlichungstag der Anmeldung:
**16.09.2020 Patentblatt 2020/38**

(73) Patentinhaber: **Track Machines Connected Gesellschaft m.b.H.**
**4020 Linz (AT)**

(72) Erfinder: **WILCZEK, Krzysztof**
**1200 Wien (AT)**

(74) Vertreter: **Haas, Franz**
**Plasser & Theurer**
**Export von Bahnbaumaschinen Gesellschaft m.b.H.**
**Johannesgasse 3**
**1010 Wien (AT)**

(56) Entgegenhaltungen:
DE-A1-102012 215 533    DE-A1-102013 010 787
US-A1- 2010 004 804    US-A1- 2014 176 711
US-A1- 2014 277 824    US-A1- 2016 159 381

**Beschreibung**

Gebiet der Technik

Die Erfindung betrifft ein Verfahren zum Betreiben eines Systems zum Navigieren innerhalb eines Gleisnetzes, mit einer Systemzentrale zum Verwalten von Netzdaten, die ein Modell (31) des Gleisnetzes repräsentieren, mit einem Schienenfahrzeug, das eine Navigationseinrichtung zum Verarbeiten von aus den Netzdaten abgeleiteten Navigationsdaten umfasst, mit Kommunikationsmittel zum Datenaustausch zwischen der Systemzentrale und der Navigationseinrichtung und mit einer Trägerplattform mit Sensoren, wobei mittels der Sensoren Merkmalsinformationen des Gleisnetzes repräsentierende Rohdaten erfasst werden, wobei die Rohdaten an die Systemzentrale übermittelt werden, wobei in der Systemzentrale ein Big Data Framework eingerichtet ist, wobei aus den Rohdaten mittels Bestimmungsalgorithmen Objektdaten generiert werden und wobei die Netzdaten mit den Objektdaten abgeglichen werden, um die Netzdaten zu aktualisieren. Zudem betrifft die Erfindung ein System zur Durchführung des Verfahrens.

Stand der Technik

Für den Einsatz von Gleisbaumaschine ist das Navigieren innerhalb eines Gleisnetzes erforderlich. Zunächst werden in einer Systemzentrale Einsatzpläne mit Einsatzorten und Arbeitsaufträgen manuell oder teilweise automatisiert erstellt. Danach erfolgt eine Übertragung von Einsatzplanlisten auf die Gleisbaumaschine, um die festgelegten Einsatzorte als Navigationsziele vorzugeben. Dabei wird in der Regel vorausgesetzt, dass ein Maschinenführer die lokalen Gegebenheiten kennt.

Aus der EP 1 862 593 A2 ist ein System bekannt, das mittels eines satellitengestützten Ortungssystems eine automatisierte Ortung einer Gleisbaumaschine innerhalb eines Gleisnetzes ermöglicht. Dabei erfolgt ein Abgleich mit charakteristischen Daten einer Streckendatenbank, um eine genaue Positionsbestimmung vorzunehmen.

Im Zuge einer Baustellenplanung kann es vorkommen, dass ein Einsatzort nicht eindeutig definiert oder fehlerhaft angegeben ist. Beispielsweise kann in den Einsatzplänen eine ungültige Referenz vermerkt sein. Solche Fehler können zu einer Verzögerung der Arbeitsdurchführung führen. Schlimmstenfalls erfolgt ein Eingriff an einem falschen Gleisabschnitt.

Zur Erstellung von Einsatzplänen dienen nach dem Stand der Technik Netzdaten, die in mehreren unterschiedlichen Datenbanken abgespeichert sind. Dabei betreffen die Datenbanken jeweils unterschiedliche Anlagen innerhalb des Gleisnetzes (z.B. Signalanlagen, Fahrbahn, Oberleitungen etc.) Diese Datenbanken sind auf die jeweiligen Erfordernisse der diversen planenden Stellen eines Eisenbahninfrastrukturbetreibers zugeschnitten, wobei in der Regel unterschiedliche Referenzen (z.B. Kilometrierung; Kennzeichen für Masten, Schwellen, Signalvorrichtung etc.) hinterlegt sind, um einen Einsatzort anzugeben.

Bei einer Änderung des Gleisnetzes wie z.B. einem Ausbau einer Weiche müssen die Netzdaten in den bekannten Datenbanken manuell aktualisiert werden. In der Praxis kommt es regelmäßig zu Problemen bei der Konsistenz, Vollständigkeit, Validität und Genauigkeit der verfügbaren Netzdaten. In Weiterer Folge führt die mangelhafte Datenpflege zu einer fehlerhaften Einsatzplanung der Gleisbaumaschine.

Aus der DE 102012215533 A1 ist ein Verfahren zum Navigieren eines Schienenfahrzeugs in einem Gleisnetz bekannt. Dabei werden mittels einer am Schienenfahrzeug angeordneten Sensoreinrichtung Landmarken erfasst und daraus Merkmalsvektoren abgeleitet. In einer Systemzentrale werden anhand der Merkmalsvektoren Landmarken mit zuvor erfassten Landmarken verglichen. Bei erkannten Änderungen wird eine Datenbank mit den Merkmalsvektoren verbessert bzw. ergänzt.

Die US 2014/0176711 A1 beschreibt ein System zum Bestimmen von Gleisnetzdaten mittels einer auf einem Schienenfahrzeug angeordneten Videokamera und einer Positionserfassungseinheit. Das System ist dazu eingerichtet, eine erstmalige Datenbasis für ein Gleisnetz zu generieren. In der US 2010/0004804 A1 sind ein System und ein Verfahren zur Inspektion eines Gleisnetzes offenbart. Dabei ist das Gleisnetz in einzelne Blöcke aufgeteilt, für die Streckenzustande abgeschätzt und aktualisiert werden. Eine Lösung zum Detektieren von Gleisschäden ist aus der US 2014/0277814 A1 bekannt. Auch hier wird ein Gleisnetz mit einem Schienenfahrzeug befahren, wobei mittels Sensoren Beschleunigungen erfasst und mit Grenzwerten verglichen werden. Erkannte Gleisschäden werden an eine Systemzentrale übermittelt und in einer Datenbank abgespeichert.

Zusammenfassung der Erfindung

Der Erfindung liegen die Aufgaben zugrunde, für ein System und für ein Verfahren der eingangs genannten Art eine Verbesserung gegenüber dem Stand der Technik anzugeben.

Erfindungsgemäß werden diese Aufgaben erfüllt durch die Merkmale der unabhängigen Ansprüche 1 und 7. Vorteilhafte Weiterbildungen der Erfindung ergeben sich aus den abhängigen Ansprüchen.

Das erfindungsgemäße Verfahren sieht vor, dass den Objektdaten in Abhängigkeit von den verwendeten Sensoren und/oder der verwendeten Trägerplattform und/oder den verwendeten Bestimmungsalgorithmen jeweils Wahrscheinlichkeitswerte bzw. Wahrscheinlichkeitsfunktionen zugeordnet werden. Auf diese Weise wird eine Bestimmungsgenauigkeit in Relation zum Datenbestand bzw. zum Gleisnetz erhoben. Dadurch erfolgt eine Klassifizierung der bestimmten Objekte hinsichtlich ihres Informationsgehalts für das Gleisnetz bzw. für die bereits vorhandenen Gleisnetzinformationen.

Dabei dient das in der Systemzentrale eingerichtete Big Data Framework zur maschinellen Auswertung der erfassten Rohdaten. Mit diesem Verfahren erfolgt eine automatisierte Anpassung der Netzdaten, sobald mittels der Sensoren entsprechende Rohdaten erfasst werden. Probleme aufgrund mangelnder Datenpflege sind damit ausgeschlossen.

Das Maschinelle Lernen im Rahmen des Big Data Frameworks ermöglicht dabei die fortlaufende Erweiterung und Anpassung der erkennbaren Objekte anhand neuer Rohdaten. Beispielsweise werden in einem Objektregister hinterlegte Definitionen bzw. Algorithmen durch neue Daten aktualisiert.

In einer günstigen Weiterbildung des Verfahrens wird nach einer erfolgten Aktualisierung der Netzdaten eine Übertragung aller aktualisierten Daten oder eines Teils der aktualisierten Daten auf die Navigationseinrichtung einer Gleisbaumaschine durchgeführt. Falls im System mehrere Gleisbaumaschinen umfasst sind, erfolgt eine entsprechende Datenübermittlung an alle Maschinen. Auf diese Weise basiert die Navigation zum nächsten Einsatzort immer auf aktualisierten Netzdaten.

Dabei ist es günstig, wenn eine Aktualisierung der Netzdaten durch neue Objektdaten in Abhängigkeit der zugeordneten Wahrscheinlichkeitswerte bzw. Wahrscheinlichkeitsfunktionen durchgeführt wird. Die Netzdaten werden somit auf den neuesten Stand gebracht, indem neue Objektdaten auf Basis des bewerteten Informationsgehalts hinzugefügt werden.

Eine weitere Verbesserung sieht vor, dass die Objektdaten anhand eines erfassten Bewegungsmusters der Trägerplattform gegliedert werden, sodass durch die Objektdaten repräsentierte Gleisobjekte aneinandergereiht als Objektkette für den Abgleich mit den als Graph abgespeicherten Netzdaten bereitgestellt werden. Das vereinfacht den Abgleich, weil durch das erfasste Bewegungsmuster eine logische Aneinanderkettung von mehreren Gleisobjekten erfolgt. Aus der Bedeutung der einzelnen Gleisobjekte wird somit die Bedeutung einer Objektkette mit komplexer Struktur abgeleitet.

Vorteilhafterweise wird dabei die Objektkette in Segmente gegliedert, wobei ein Segment mit dem Graphen anhand markanter Gleisobjekte abgeglichen wird. Auch dieser Verfahrensschritt optimiert den Abgleich der Netzdaten mit den Objektdaten.

Ein einfach durchzuführender Abgleich eines Segments mit einem Teilgraphen sieht vor, dass ein Übereinstimmungsausmaß bestimmt wird und dass der Teilgraph durch das Segment ersetzt wird, wenn das Übereinstimmungsausmaß ein vorgegebenes Mindestausmaß übersteigt.

Die Fehlertoleranz des Verfahrens wird gesteigert, wenn beim Abgleich eines Segments mit einem Teilgraphen ein nicht verifizierbares Gleisobjekt als Knoten des Teilgraphen erhalten bleibt, bis eine vorgegebene Anzahl an fehlgeschlagenen Verifizierungen erreicht wird. Auf diese Weise haben Sensor- oder Übertragungsstörungen keinen Einfluss auf die Qualität der Netzdaten.

Für einen Navigationsvorgang ist es vorteilhaft, wenn mittels an dem Schienenfahrzeug angeordneter Sensoren umliegende Gleisobjekte erfasst werden und wenn eine aktuelle Position des Schienenfahrzeugs durch einen Abgleich der erfasst Gleisobjekte mit den Netzdaten bestimmt wird. Änderungen des Gleisnetzes werden dabei automatisch bei der Navigation der Gleisbaumaschine berücksichtigt.

Das erfindungsgemäße System zur Durchführung eines der beschriebenen Verfahren umfasst eine Systemzentrale zum Verwalten von Netzdaten, die ein Modell des Gleisnetzes repräsentieren, ein Schienenfahrzeug mit einer Navigationseinrichtung zum Verarbeiten von aus den Netzdaten abgeleiteten Navigationsdaten, Kommunikationsmittel zum Datenaustausch zwischen der Systemzentrale und der Navigationseinrichtung und eine Trägerplattform mit Sensoren zum Erfassen von Rohdaten, die Merkmalsinformationen des Gleisnetzes repräsentieren, wobei die Systemzentrale dazu eingerichtet ist, aus den Rohdaten mittels Bestimmungsalgorithmen Objektdaten zu generieren. Dabei ist in der Systemzentrale ein Big Data Framework eingerichtet, um bei einer Bewertung der Rohdaten und einem Abgleich mit den Netzdaten den Objektdaten in Abhängigkeit von den verwendeten Sensoren und/oder der verwendeten Trägerplattform und/oder den verwendeten Bestimmungsalgorithmen jeweils Wahrscheinlichkeitswerte bzw. Wahrscheinlichkeitsfunktionen zuzuordnen

Auf diese Weise werden die Netzdaten laufend an einen erfassten Istzustand angepasst. Die Einrichtung des Big Data Frameworks in der Systemzentrale ermöglicht dabei eine automatisierte Bewertung der erfassten Rohdaten anhand vorgegebener Bewertungskriterien bzw. -algorithmen. Dabei kommen neben konventionellen Datenbanken und Datenanalysewerkzeugen unterschiedliche Prozesse des Maschinellen Lernens zum Einsatz. Auf diese Weise wird ein Modell des Gleisnetzes anhand der erfassten Rohdaten aufgebaut und laufende weiterentwickelt. Basierend auf dem Modell und einem auf der Gleisbaumaschine installierten Sensorsystem erfolgt eine automatisierte Echtzeit-Positionsbestimmung. Zudem können Arbeitsparameter ortsabhängig vordefiniert werden.

Dabei ist es vorteilhaft, wenn eine Gleisbaumaschine als Trägerplattform ausgebildet ist und ein Sensorsystem umfasst, das während eines Befahrens des Gleisnetzes Rohdaten sammelt. Somit werden die Netzdaten allein durch einen zunehmenden Einsatz der Gleisbaumaschine immer präziser, sodass eine akkurate Einsatzplanung sichergestellt ist.

Zudem ist es sinnvoll, wenn das System als Trägerplattform ein Messfahrzeug oder ein anderes mit Sensoren ausgestattetes gleisgebundenes Fahrzeug umfasst. In der Regel wird ein Gleisnetz in vorgegebenen Zeitintervallen mit einem Messfahrzeuge abgefahren, um einen Istzustand zu erheben. Bei einer Einbindung in das vorliegende System dienen auch die mittels des Messfahrzeugs erfassten Rohdaten zur Aktualisierung der Netzdaten. Auch konventionelle Schienenfahrzeuge können zu diesem Zweck mit Sensorsystemen ausgestattet sein.

Eine weitere Verbesserung sieht vor, dass das System eine fliegende Trägerplattform, insbesondere eine mit Sensoren ausgestattete Drohne umfasst. Auch hochauflösende Satellitenbilder können als Rohdaten herangezogen werden, um die Netzdaten mit Informationen anzureichern.

In einer vorteilhaften Ausprägung sind die Netzdaten als Graph mit Gleisobjekten als Knoten und mit Relationen zwischen den Gleisobjekten als Kanten abgespeichert. Auf diese Weise sind die Netzdaten einfach zu verwalten. Erleichtert wird insbesondere der Abgleich mit den bewerteten Rohdaten mittels geeigneter Algorithmen.

Dabei ist es günstig, wenn für ein Gleisobjekt charakteristische Datenmuster vorgegeben sind. Grundlage dafür bieten signifikante Merkmale, die jedes Objekt einer bestimmten Klasse (z.B. Schwellen, Schienenbefestigungen, Leuchtsignale etc.) aufweist. Dann finden sich abhängig von den verwendeten Sensoren in den Rohdaten entsprechende Datenmuster, die eine effiziente Objektzuordnung sicherstellen.

Kurze Beschreibung der Zeichnungen

Die Erfindung wird nachfolgend in beispielhafter Weise unter Bezugnahme auf die beigefügten Figuren erläutert. Es zeigen in schematischer Darstellung:

Fig. 1 Gleisbaumaschine
Fig. 2 Gleisnetz
Fig. 3 Systemaufbau
Fig. 4 Gliederung von Gleisabschnitten
Fig. 5 Verfahrensablauf

Beschreibung der Ausführungsformen

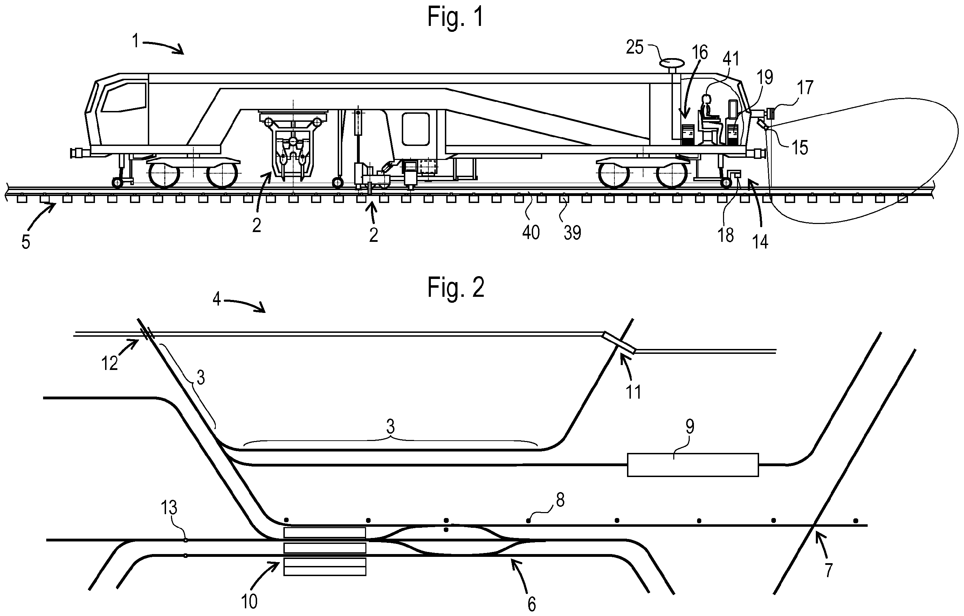

Eine Komponente des erfindungsgemäßen Systems ist eine in Fig. 1 dargestellte Gleisbaumaschine 1, die zu einem Arbeitseinsatz navigiert werden soll. Diese Gleisbaumaschine 1 umfasst Arbeitsaggregate 2 zum Bearbeiten eines Gleisabschnittes 3 eines Gleisnetzes 4. Das Gleisnetz 4 umfasst verschiedene Gleisobjekte wie beispielsweise Gleise 5, Weichen 6, Kreuzungen 7, Masten 8, Tunnel 9, Bahnhöfe 10, Unterführungen 11, Bahnübergänge 12 oder Balisen 13, wie beispielhaft in Fig. 2 dargestellt.

Des Weiteren ist die Gleisbaumaschine 1 mit verschiedenen Sensoren bzw. Sensorsystemen 14 ausgestattet, um die Umgebung des befahrenen Gleises 5 und die aktuelle Position zu erfassen. Das sind zum Beispiel eine Kamera 15, ein Positionierungssystem 16, ein Lichtraumscanner 17 oder ein Schienenscanner 18. Auf diese Weise fungiert die Gleisbaumaschine 1 als Trägerplattform für die Sensoren bzw. Sensorsysteme 14.

Um an einen zu bearbeitenden Gleisabschnitt 3 zu gelangen, umfasst die Gleisbaumaschine 1 eine Navigationseinrichtung 19. Diese ist als Rechen- und Steuereinheit eingerichtet und dient zur Navigation innerhalb des Gleisnetzes 4, das durch Netzdaten repräsentiert ist. Mittels der Navigationseinrichtung 19 werden aus den Netzdaten abgeleitete Navigationsdaten verarbeiten und mit Sensordaten abgeglichen, um die aktuelle Position der Gleisbaumaschine 1 zu ermitteln.

Ein Ziel der vorliegenden Erfindung ist es, die Netzdaten laufend automatisiert zu aktualisieren. Dazu erfolgt zunächst mittels der Sensoren bzw. Sensorsysteme 14 eine Erfassung von Rohdaten, die Merkmalsinformationen des Gleisnetzes 4 repräsentieren. In weiterer Folge werden die Rohdaten bewertet und mit den in einer Systemzentrale 20 verwalteten Netzdaten abgeglichen. Aus diesem Datenabgleich können auch Rückschlüsse auf den Zustand des Gleisnetzes 4 bzw. einzelne Gleisabschnitte 3 gezogen werden. Beispielsweise lässt eine häufige Veränderung von erfassten Lagedaten auf eine instabile Gleislage rückschließen.

Zur Erfassung der Rohdaten können neben der Gleisbaumaschine 1 andere Trägerplattformen eingesetzt werden, beispielsweise ein Messfahrzeug 21, ein sonstiges Schienenfahrzeug 22 oder eine fliegende Trägerplattform 23. Als ruhende Trägerplattform 24 können mit Sensoren 14 ausgestatte Infrastruktureinrichtungen genutzt werde. Das kann beispielsweise ein Mast 8 sein, mit einer daran befestigten Kamera 15, die einen Gleisabschnitt 3 beobachtet.

Auch neben dem Gleis 5 verbaute Glasfaserkabel sind als Sensoren 14 nutzbar. Basis dafür ist das sogenannte Distributed Acoustic Sensing (DAS), bei dem Laserimpulse durch Glasfaserkabel geschickt werden, um so entlang eines Gleisabschnitts 3 Schallsignale und daraus ableitbare Aktivitäten in Echtzeit zu registrieren. Mit solchen ruhenden Trägerplattformen 24 werden Rohdaten eines beobachteten Gleisabschnittes 3 über der Zeit gesammelt. Neben der Erfassung von Objektveränderungen sind diese Rohdaten auch zur Positionsverifizierung von bewegten Trägerplattformen 1, 21, 22, 23 nutzbar.

Das Messfahrzeug 21 ist zum Beispiel mit einem GNSS Empfänger 25, einem Lichtraumscanner 17 und einem Schienenscanner 18 ausgestattet. Das sonstige Schienenfahrzeug 22 umfasst einen GNSS Empfänger 25 und die fliegende Trägerplattform 23 umfasst eine Kamera 15 oder sonstige Einrichtungen zur Erfassung von Luftaufnahmen. Mit all diesen Sensoren bzw. Sensorsystemen 14 werden unterschiedliche Rohdaten gesammelt und für die Auswertung bereitgestellt. Dabei werden die Rohdaten je nach Datenvolumen und vorhandener Rechenleistung auf der Trägerplattform 1, 21, 22, 23, 24 vorprozessiert oder direkt auf die Systemzentrale 20 übertragen.

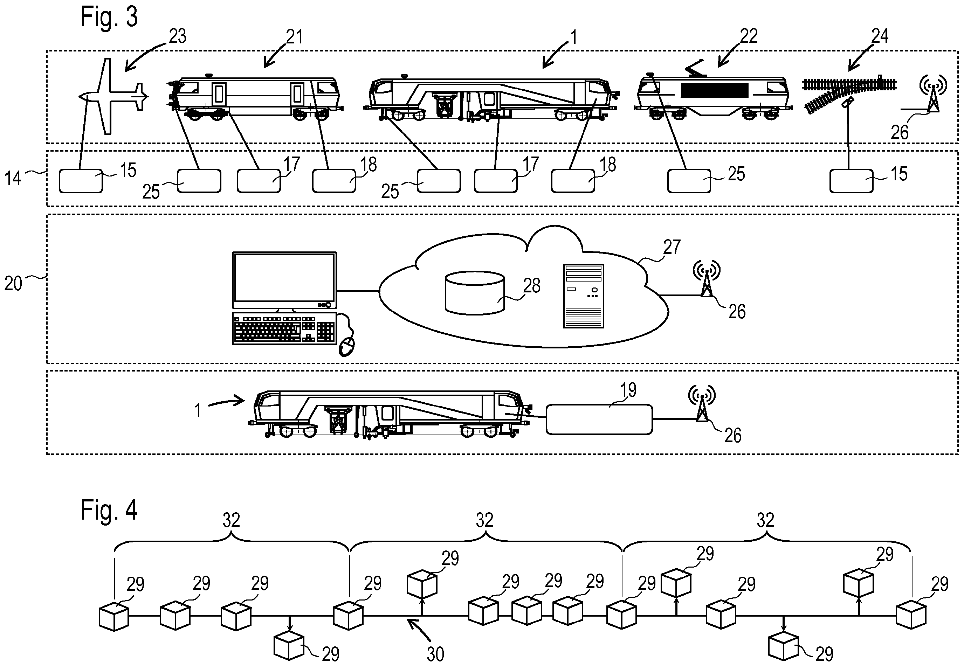

Wie im beispielhaften Systemaufbau in Fig. 3 ersichtlich sind als weitere Systemkomponenten Kommunikationsmittel 26 vorgesehen. Diese Kommunikationsmittel 26 dienen zum Austausch von Daten zwischen der Systemzentrale 20, den Sensorsystemen 14 und der Navigationseinrichtung 19. Dabei handelt es sich beispielsweise um Einrichtungen zur drahtlosen Kommunikation über ein Mobilfunknetz. In einer sehr einfachen Ausprägung des erfindungsgemäßen Systems ist die Systemzentrale 20 in der Gleisbaumaschine 1 untergebracht, sodass ein autarkes System zur Navigation und Netzdatenaktualisierung vorliegt. Dabei können die Kommunikationsmittel 26 Elemente eines installierten Bussystems sein.

In der Systemzentrale 20 ist ein Big Data Network 27 eingerichtet. Dieses unterstützt neben konventionellen Datenbanken 28 und Datenanalysewerkzeugen auch verschiedene Maschine Learning Algorithmen. Beispiele dafür sind noSQL oder Hadoop. Auf diese Weise dient die Systemzentrale 20 zur Sammlung, Speicherung und Verarbeitung der Daten.

Die Sensorsystemen 14 produzierten aus Datenpunkten $m_{r,s}^i(t)$ einen Datentensor $S_k(t)$ mit einer beliebigen Dimension k zu einem Zeitpunkt t:

$$S_k(t) = \big(M_1(t), \dots, M_k(t)\big)$$

wobei für $i$ = 1, ..., k die $M_i$ $r \times s$ — Matrizen sind, also

$$M_i(t) = \begin{pmatrix} m_{1,1}^i(t) & \cdots & m_{1,s}^i(t) \\ \vdots & \ddots & \vdots \\ m_{r,1}^i(t) & \cdots & m_{r,s}^i(t) \end{pmatrix}$$

Auf bewegten Trägerplattformen 1, 21, 22, 23 angeordnete Sensoren 14 liefern insbesondere Datenpunkte $m_{r,s}^i(t)$ mit räumlichen Informationen. Bei ruhenden Trägerplattformen 24 bilden die mittels Sensoren 14 erfassten Datenpunkte hingegen insbesondere zeitliche Veränderungen ab.

Aus charakteristischen Merkmalen in den Datenpunkten $m_{r,s}^i(t)$ der Sensorsysteme 14 werden als Objektdaten virtuell indizierte Objekte 29 erstellt *(Objekt_i)*. Diese repräsentieren Gleisobjekte 4-13, die mit stochastischer Sicherheit im Gleisumfeld erkennbar sind und als Referenzen für die Navigation dienen können. Konkret zeichnen sich die Objekte 29 durch signifikant reproduzierbare Muster aus. In einem Objektregister werden die Definitionen (bzw. Algorithmen) der Objekte 29 durch neue Daten aktualisiert.

Dabei wird für jede Objekteigenschaft eine Wahrscheinlichkeit berechnet bzw. eine Wahrscheinlichkeitsfunktion $P_x$ zugeordnet:

$$Objekt_{vi}(t) = \begin{pmatrix} Objekt\ id & P_{id} \\ Zeit\ t & P_t \\ Koordinaten\ x,y,z & P_{x,y,z} \\ Offset\ \Delta x, \Delta y, \Delta z & P_{\Delta x, \Delta y, \Delta z} \\ Größe\ \Delta t & P_{\Delta t} \\ nächstes\ Objekt\ O_{i+1} & P_{O_{i+1}} \\ \Delta t_{O_{i+1}} & P_{\Delta t_{O_{i+1}}} \\ Datenpunkte\ M_1 & P_{M_1} \\ \dots & \dots \\ Datenpunkte\ M_x & P_{M_x} \end{pmatrix}$$

Neben den sich aus der Objektverifizierung ergebenen Metadaten beschreiben insbesondere die Datenpunkte einen aktuellen Zustand des virtuell indizierten Objekts 29.

Die jeweilige Wahrscheinlichkeitsfunktion P ist von der Art der Sensoren bzw. des Sensorsystems 14, der Art der Trägerplattform 1, 21, 22, 23, 24 und den Algorithmen im Objektregister abhängig. So ist beispielsweise für neuere Sensorsysteme 14 eine Wahrscheinlichkeitsfunktion mit geringer Streuung vorgegeben. Für ältere Sensoren 14 mit geringerer Genauigkeit ist hingegen eine größere Streuung vorgegeben. Eine aus abgespeicherten Beobachtungsvorgängen abgeleitete Erkennungswahrscheinlichkeit berücksichtigt die Anzahl der bisher erkannten Objekte 29. Auf diese Weise wird ein Grad an Eindeutigkeit eines Objektes 29 in Relation zu einem in der Systemzentrale 20 abgespeicherten Datenbestand erhoben. Dementsprechend erfolgt eine Klassifizierung der Objekte 29 anhand des bewerteten Informationsgehalts in Bezug auf das Gesamt-Gleisnetz und dessen Informationen.

Zudem wird das Auswertungsverfahren laufend verbessert, indem die erkennbare Objekte 29 durch maschinelles oder manuelles Anlernen kontinuierliches erweitert und angepasst werden. Das autonome maschinelle Anlernen innerhalb des Big Data Framework basiert dabei auf jenen Daten, die in der Systemzentrale 20 neu erfasst werden.

Wie in Fig. 4 dargestellt, werden virtuell indizierte Objekte 29 entsprechend eines Bewegungsmusters der Trägerplattform 1, 21, 22 relativ zueinander verkettet. So entstehen bei gleisgebundenen Trägerplattformen 1, 21, 22 aneinandergereihte virtuell indizierte Objekte 29, wobei die sich ergebende Objektkette 30 als eine semantische Kette $K_{t_n}$ aufgefasst werden kann:

$$K_{t_n} = (Objekt_{vi}(t_n), \dots, Objekt_{vi}(t_{n+m})),$$

wobei $t_n$ eine Anfangszeit und $t_{n+m}$ eine Endzeit einer Fahrt der Trägerplattform 1, 21, 22 ist.

Innerhalb dieser Kette werden markante Objekte 29 (z.B. Objektdaten einer Weiche 6) als Diskretisierungspunkte zur Untergliederung in Segmente 31 vorgegeben. Diese können dynamisch, aus der Wahrscheinlichkeit der Erkennung oder aus der Relevanz im Netz (Grad der Eindeutigkeit) bestimmt werden. In Fig. 4 repräsentieren die aneinandergereihten Objekte 29 beispielsweise von links nach rechts eine Weiche 6, eine Balise 13, ein Gleis 5, einen Masten 8, ein Tunnelportal, einen Tunnel 9, ein Tunnelportal, eine Weiche 6, einen Masten 8, eine Balise 13, zwei Masten 8 und eine Weiche 6.

Neue Objektketten 30 werden mit den Netzdaten, das heißt mit dem Modell 31 des Gleisnetzes 4 abgeglichen. Die Netzdaten sind dabei als Graph $N(t_a)$ abgespeichert, wobei $t_a$ ein Aktualisierungszeitpunkt des jeweiligen Objekts 29 ist:

$$N(t_a) = (Objekt_v(t), Kante_v(t))$$

$$N(t_{neu}) = Objekt_{vi}(t) \rightarrow N(t_{alt})$$

Segmente 32 der Objektkette 30 werden über markante Objekte 29 auf das Modell 31 des Gleisnetzes 4 abgeglichen (gemappt). Stimmen ein Segment 29 und ein Teilgraph mit einer hohen Wahrscheinlichkeit überein, werden die im Segment 29 enthaltenen virtuell indizierten Objekte 29 in den Graphen überführt. Auf diese Weise werden die Eigenschaften des jeweiligen virtuell indizierten Objekts 29 unter Berücksichtigung der zugeordneten Wahrscheinlichkeitsfunktionen P für eine Aktualisierung der Eigenschaften des Modells 31 verwendet (Update der Netzdaten). Dabei steigt mit zunehmender Erfassung von Rohdaten die Zuverlässigkeit und Genauigkeit der Netzdaten:

$$N(t_a) = \left( \left( \begin{array}{ll} Objekt\ id & P_{id} \\ Update\ t_a & P_{t_a} \\ Koordinaten\ x,y,z & P_{x,y,z} \\ Größe\ d & P_d \\ Datenpunkte\ M_1 & P_{M_1} \\ ... & ... \\ Datenpunkte\ M_x & P_{M_x} \end{array} \right), \left( \begin{array}{ll} nächstes\ Objekt\ O_{v+1} & P_{O_{v+1}} \\ Abstand\ nächstes\ Objekt\ x,y,z & P_{x,y,z} \\ ... & ... \end{array} \right) \right)$$

Auch mittels ruhender Trägerplattformen 24 erfasste Datenpunkte werden in entsprechender Weise mit den Netzdaten abgeglichen, wobei hier die Informationen über zeitliche Veränderungen im Vordergrund stehen.

Bei einem Aktualisierungsvorgang kann es aufgrund von Sensorfehlern oder Behinderungen bei der Objekterfassung vorkommen, dass einzelne Objekte 29 nicht verifiziert werden können. Dann ist es sinnvoll, wenn diese in den Netzdaten erhalten bleiben, bis bei einem erneuten Erfassungsvorgang 33 eine Falsifizierung erfolgt oder wenn eine Verifikation mehrmals ausbleibt.

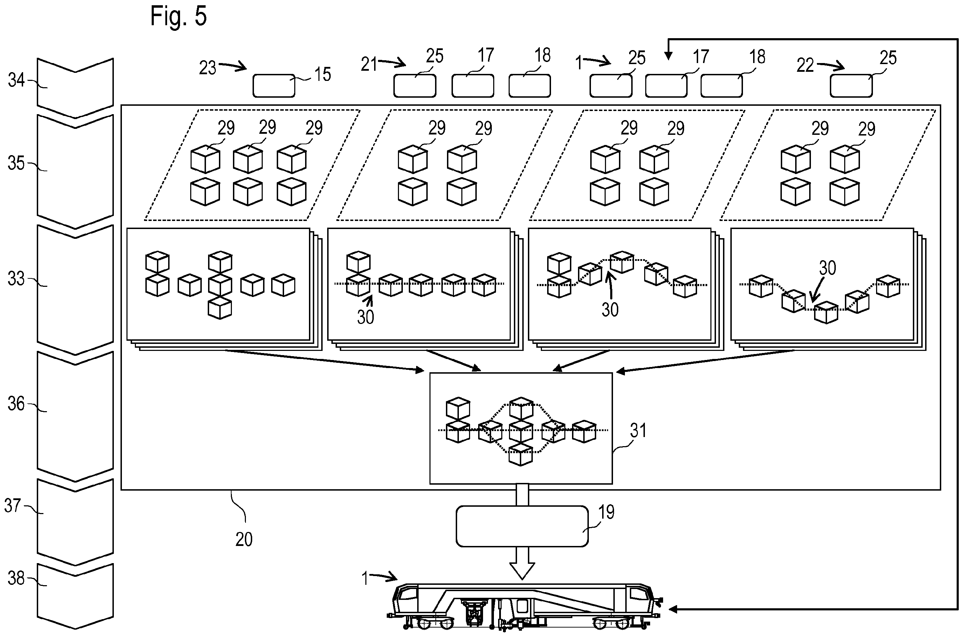

In Fig. 5 ist der Verfahrensablauf überblicksmäßig dargestellt. Das Verfahren gliedert sich dabei grob in folgende Verfahrensschritte:

- Input 34 der verschiedenen Trägerplattformen 1, 21, 22, 23, 24 und der Sensorsysteme 14
- Signalanalyse 35 zur Objektindikation mit statistischen Größen
- Wiederholte Erfassungsvorgänge 33 (Beobachtungen) zur Verifizierung bzw. Falsifizierung der Objektindikation
- Mapping 36 unterschiedlicher Erfassungsarten bzw. Beobachtungsperspektiven
- Output 37 des Gleisnetzmodells 31 (aktualisierte Netzdaten)
- Navigationsvorgang 38 einer Gleisbaumaschine 1

In einer anfänglichen Phase formuliert das System anhand der vorgegebenen Algorithmen ein Ausgangsmodell 31 für das Gleisnetz 4. Dazu werden beispielsweise Luftbildaufnahmen, Rohdaten eines Messfahrzeugs 21, Rohdaten des Gleisbaufahrzeugs 1 und Rohdaten eines sonstigen Fahrzeugs 22 ausgewertet. In Fig. 5 ergibt die jeweilige Signalanalyse 35 zunächst unterschiedliche Objekte 29 bzw. Objektklassen, die einzelnen Gleisobjekten 5-13 zuordenbar sind. Bei Luftaufnahmen sind das zum Beispiel Gleise 5, Weichen 6, Tunnel 9, Masten 8, Bahnhöfe 10 etc. Die Rohdaten der gleisgebundenen Trägerplattformen 1, 22, 23 sind den Gleisobjekten Gleise 5, Weichen 6, Tunnel 9 etc. zuordenbar.

Im Zuge der wiederholten Erfassungsvorgänge 33 werden die einzelnen Objekte 29 in ihrer Relation zueinander verifiziert bzw. falsifiziert. Im Falle der gleisgebundenen Trägerplattformen 1, 22, 23 werden Objektketten 30 gebildet, die einen befahren Gleisabschnitt 3 abbilden. Eine Zusammenführung dieser Auswertungsergebnisse mittels Mapping 36 ergibt schließlich das Modell 31 des erfassten Gleisnetzes 4.

Für eine verlässliche Durchführung eines Navigationsvorgangs 38 werden die Netzdaten nach einer erfolgten Datenaktualisierung oder in vorgegebenen Zeitabständen von der Systemzentrale 20 auf die Navigationseinrichtung 19 der Gleisbaumaschine 1 übertragen. Dabei ist es günstig, wenn über die gewünschte Konfidenz parametrisiert wird, welche in den Netzdaten enthaltenen Objekte 29 für die Navigation auf die Gleisbaumaschine 1 übertragen werden.

Beim Navigationsvorgang 38 selbst werden Objekte bzw. Objektdaten 29 mit jenen Gleisobjekte 5-13 abgeglichen, die aktuell im Umfeld der Gleisbaumaschine 1 mittels der Sensoren bzw. Sensorsysteme 14 erfasste werden. Auf diese Weise dienen erkannte Gleisobjekte 5-13 als Referenz zur Ortsbestimmung. Zudem können Ergebnisse einer Spurweitenmessung zur feineren Positionierung am Gleis 5 verwendet werden. Der erfasste Verlauf der Spurweite bildet dabei weitere Datenpunkte jener Objekte 29, die das entsprechende Gleis 5 repräsentieren. In einer Erweiterung können auch erfassbare charakteristische Merkmale von Schwellen 39 oder Schienen 40 genutzt werden (Prägungen, Materialmerkmale etc.).

Zudem dienen die während des Navigationsvorgangs 38 erfassten Rohdaten als neuer Dateninput zur Aktualisierung der Netzdaten. Mit dem vorliegenden System werden Änderungen im Gleisnetz 4 infolge von Umbauten oder Störungen automatisch für folgende Navigationsvorgänge 38 berücksichtigt. Die Kognition erfolgt anlass- bzw. zeitbezogen automatisch in Abhängigkeit der Migrationsgeschwindigkeit des Gleisnetzes 4.

Günstigerweise werden einem Maschinenführer 41 erkannte und antizipierte Objekte 29 im aktuellen Umfeld der Gleisbaumaschine 1 zur Orientierung angezeigt. In diese Anzeige können zusätzlich Arbeitsanweisungen aufgenommen werden. Auch Arbeitsparameter können dem Maschinenführer 41 ortsabhängig vorgegeben oder direkt an ein Arbeitsaggregat 2 übermittelt werden. Auf diese Weise erfolgt eine automatisierte örtliche Anpassung von Arbeitsparametern, wodurch ein optimierter Einsatz der Gleisbaumaschine 1 ermöglicht wird. Bei einer Stopfmaschine sind das beispielsweise Hebe- und Richtwerte sowie Zeitvorgaben für die Stopfzyklen. Bei anderen Gleisbaumaschinen 1 können Arbeitsparameter wie Schotterbedarf, Abraummengen von Altschotter ortsabhängig angepasst werden.

**Patentansprüche**

1. Verfahren zum Betreiben eines Systems zum Navigieren innerhalb eines Gleisnetzes (4), mit einer Systemzentrale (20) zum Verwalten von Netzdaten, die ein Modell (31) des Gleisnetzes (4) repräsentieren, mit einem Schienenfahrzeug (1), das eine Navigationseinrichtung (19) zum Verarbeiten von aus den Netzdaten abgeleiteten Navigationsdaten umfasst, mit Kommunikationsmittel (26) zum Datenaustausch zwischen der Systemzentrale und der Navigationseinrichtung und mit einer Trägerplattform (1, 21, 22, 23, 24) mit Sensoren, wobei mittels der Sensoren (14) Merkmalsinformationen des Gleisnetzes (4) repräsentierende Rohdaten erfasst werden, wobei die Rohdaten an die Systemzentrale (20) übermittelt werden, wobei in der Systemzentrale (20) ein Big Data Framework (27) eingerichtet ist, wobei aus den Rohdaten mittels Bestimmungsalgorithmen Objektdaten (29) generiert werden und wobei die Netzdaten mit den Objektdaten (29) abgeglichen werden, um die Netzdaten zu aktualisieren, **dadurch gekennzeichnet, dass** den Objektdaten (29) in Abhängigkeit von den verwendeten Sensoren (14) und/oder der verwendeten Trägerplattform (1, 21, 22, 23, 24) und/oder den verwendeten Bestimmungsalgorithmen jeweils Wahrscheinlichkeitswerte bzw. Wahrscheinlichkeitsfunktionen zugeordnet werden.

2. Verfahren nach Anspruch 1, **dadurch gekennzeichnet, dass** nach einer erfolgten Aktualisierung der Netzdaten eine Übertragung aller aktualisierten Daten oder eines Teils der aktualisierten Daten auf die Navigationseinrichtung (19) einer Gleisbaumaschine (1) durchgeführt wird.

3. Verfahren nach Anspruch 1 oder 2, **dadurch gekennzeichnet, dass** eine Aktualisierung der Netzdaten durch neue Objektdaten (29) in Abhängigkeit der zugeordneten Wahrscheinlichkeitswerte bzw. Wahrscheinlichkeitsfunktionen durchgeführt wird.

4. Verfahren nach einem der Ansprüche 1 bis 3, **dadurch gekennzeichnet, dass** die Objektdaten (29) anhand eines erfassten Bewegungsmusters der Trägerplattform (1, 21, 22, 23) gegliedert werden, sodass durch die Objektdaten (29) repräsentierte Gleisobjekte (5-13) aneinandergereiht als Objektkette (30) für den Abgleich mit den als Graph abgespeicherten Netzdaten bereitgestellt werden.

5. Verfahren nach Anspruch 4, **dadurch gekennzeichnet, dass** die Objektkette (30) in Segmente (32) gegliedert wird und dass ein Segment (32) mit dem Graphen anhand markanter Gleisobjekte abgeglichen wird.

6. Verfahren nach einem der Ansprüche 1 bis 4, **dadurch gekennzeichnet, dass** mittels an dem Schienenfahrzeug (1) angeordneter Sensoren (14) umliegende Gleisobjekte (5-13) erfasst werden und dass eine aktuelle Position des Schienenfahrzeugs (1) durch einen Abgleich der erfasst Gleisobjekte (5-13) mit den Netzdaten bestimmt wird.

7. System zur Durchführung eines Verfahrens nach einem der Ansprüche 1 bis 6, umfassend folgende Systemkomponenten:

   - eine Systemzentrale (20) zum Verwalten von Netzdaten, die ein Modell (31) des Gleisnetzes (4) repräsentieren,
   - ein Schienenfahrzeug (1) mit einer Navigationseinrichtung (19) zum Verarbeiten von aus den Netzdaten abgeleiteten Navigationsdaten,
   - Kommunikationsmittel (26) zum Datenaustausch zwischen der Systemzentrale (20) und der Navigationseinrichtung (19),
   - eine Trägerplattform (1, 21, 22, 23, 24) mit Sensoren (14) zum Erfassen von Rohdaten, die Merkmalsinformation des Gleisnetzes (4) repräsentieren,

   wobei die Systemzentrale (20) dazu eingerichtet ist, aus den Rohdaten mittels Bestimmungsalgorithmen Objektdaten (29) zu generieren,
   **dadurch gekennzeichnet, dass** in der Systemzentrale (20) ein Big Data Framework (27) eingerichtet ist, um bei einer Bewertung der Rohdaten und einem Abgleich mit den Netzdaten den Objektdaten (29) in Abhängigkeit von den verwendeten Sensoren (14) und/oder der verwendeten Trägerplattform (1, 21, 22, 23, 24) und/oder den verwendeten Bestimmungsalgorithmen jeweils Wahrscheinlichkeitswerte bzw. Wahrscheinlichkeitsfunktionen zuzuordnen.

8. System nach Anspruch 7, **dadurch gekennzeichnet, dass** eine Gleisbaumaschine (1) als Trägerplattform ausgebildet ist und ein Sensorsystem (14) umfasst, das während eines Befahrens des Gleisnetzes (4) Rohdaten sammelt.

9. System nach Anspruch 7 oder 8, **dadurch gekennzeichnet, dass** das System als Trägerplattform ein Messfahrzeug (21) oder ein anderes mit Sensoren (14) ausgestattetes gleisgebundenes Fahrzeug (22) umfasst.

**10.** System nach einem der Ansprüche 7 bis 9, **dadurch gekennzeichnet, dass** das System eine fliegende Trägerplattform (23), insbesondere eine mit Sensoren (14) ausgestattete Drohne umfasst.

**11.** System nach einem der Ansprüche 7 bis 10, **dadurch gekennzeichnet, dass** die Netzdaten als Graph mit Gleisobjekten (5-13) als Knoten und mit Relationen zwischen den Gleisobjekten (5-13) als Kanten abgespeichert sind.

**Claims**

**1.** A method of operating a system for navigating within a track network (4), with a system central (20) for administering network data which represent a model (31) of the track network (4), with a track maintenance machine (1) comprising a navigation device (19) for processing navigation data derived from the network data, with communication means (26) for data exchange between the system central (20) and the navigation device (19) and with a carrier platform (1, 21, 22, 23, 24) with sensors (14) for collecting raw data which represent characteristic information of the track network (4), wherein the raw data are transmitted to the system central (20), wherein in the system central (20) a big data framework (27) is installed, wherein object data (29) are generated from the raw data by means of identification algorithms and wherein the network data are synchronized with the object data (29) in order to update the network data, **characterized in that** probability values or probability functions are assigned to the object data (29) in each case in dependence on the sensors (14) used and/or the carrier platform (1, 21, 22, 23, 24) used and/or the identification algorithms used.

**2.** A method according to claim 1, **characterized in that**, after an update of the network data has taken place, all the updated data or part of the updated data are transferred to the navigation device (19) of a rail vehicle (1).

**3.** A method according to claim 1 or 2, **characterized in that** an update of the network data by new object data (29) is carried out in dependence on the assigned probability values or probability functions.

**4.** A method according to one of claims 1 to 3, **characterized in that** the object data (29) are organized on the basis of a detected motion pattern of the carrier platform (1, 21, 22, 23), so that track objects (5-13) represented by the object data (29) are supplied, strung together as an object chain (30), for the synchronization with the network data stored as a graph.

**5.** A method according to claim 4, **characterized in that** the object chain (30) is subdivided into segments (32), and that a segment (32) is synchronized with the graph on the basis of distinctive track objects.

**6.** A method according to one of claims 1 to 4, **characterized in that** surrounding track objects (5-13) are recorded by means of sensors (14) arranged on the rail vehicle (1), and that a current position of the rail vehicle (1) is determined by synchronization of the recorded track objects (5-13) with the network data.

**7.** A system for performing a method according to one of claims 1 to 6, comprising the following system components:

- a system central (20) for administering network data which represent a model (31) of the track network (4),
- a rail vehicle (1) comprising a navigation device (19) for processing navigation data derived from the network data,
- communication means (26) for data exchange between the system central (20) and the navigation device (19),
- a carrier platform (1, 21, 22, 23, 24) with sensors (14) for collecting raw data which represent characteristic information of the track network (4), wherein the system central (20) is designed to generate object data (29) from the raw data by means of identification algorithms,

**characterized in that** a big data framework (27) is set up in the system central (20) in order to evaluate the raw data and synchronize them with the network data the object data (29) in dependence on the sensors (14) used and/or the carrier platform (1, 21, 22, 23, 24) used and/or the identification algorithms used in each case to assign probability values or probability functions.

**8.** A system according to claim 7, **characterized in that** the rail vehicle (1) is designed as a carrier platform and comprises a sensor system (14) which collects raw data during travel on the track network (4).

9. A system according to claim 7 or 8, **characterized in that** the system comprises as carrier platform a measuring vehicle (21) or other track-bound vehicle (22) equipped with sensors (14).

10. A system according to one of claims 7 to 9, **characterized in that** the system comprises a flying carrier platform (23), in particular a drone equipped with sensors (14).

11. A system according to one of claims 7 to 10, **characterized in that** the network data are stored as a graph with track objects (5-13) as nodes and with relations between the track objects (5-13) as edges.

**Revendications**

1. Procédé d'exploitation d'un système pour la navigation au sein d'un réseau ferroviaire (4), avec une centrale de système (20) pour la gestion de données de réseau qui représentent un modèle (31) du réseau ferroviaire (4), avec un véhicule ferroviaire (1) qui comprend un dispositif de navigation (19) pour le traitement de données de navigation dérivées des données de réseau, avec des moyens de communication (26) pour l'échange de données entre la centrale de système et le dispositif de navigation et avec une plate-forme de support (1, 21, 22, 23, 24) avec des capteurs, dans lequel des données brutes représentant des informations caractéristiques du réseau ferroviaire (4) sont détectées au moyen des capteurs (14), dans lequel les données brutes sont communiquées à la centrale de système (20), dans lequel une infrastructure de mégadonnées (27) est configurée dans la centrale de système (20), dans lequel des données d'objet (29) sont générées à partir des données brutes au moyen d'algorithmes de détermination et dans lequel les données de réseau sont alignées avec les données d'objet (29) pour actualiser les données de réseau, **caractérisé en ce que** des valeurs de probabilité ou fonctions de probabilité sont à chaque fois associées aux données d'objet (29) en fonction des capteurs utilisés (14) et/ou de la plate-forme de support utilisée (1, 21, 22, 23, 24) et/ou des algorithmes de détermination utilisés.

2. Procédé selon la revendication 1, **caractérisé en ce qu'**une transmission de toutes les données actualisées ou d'une partie des données actualisées est réalisée sur le dispositif de navigation (19) d'une machine de pose de voie (1) après une actualisation réussie des données de réseau.

3. Procédé selon la revendication 1 ou 2, **caractérisé en ce qu'**une actualisation des données de réseau par de nouvelles données d'objet (29) est réalisée en fonction des valeurs de probabilité ou fonctions de probabilité associées.

4. Procédé selon une des revendications 1 à 3, **caractérisé en ce que** les données d'objet (29) sont structurées à l'aide d'un modèle de déplacement détecté de la plate-forme de support (1, 21, 22, 23) de sorte que des objets de voie (5 à 13) représentés par les données d'objet (29) sont mis à disposition de manière juxtaposée en tant que chaîne d'objets (30) pour l'alignement avec les données de réseau mémorisées en tant que graphe.

5. Procédé selon la revendication 4, **caractérisé en ce que** la chaîne d'objets (30) est structurée en segments (32) et qu'un segment (32) est aligné avec le graphe à l'aide d'objets de voie marquants.

6. Procédé selon une des revendications 1 à 4, **caractérisé en ce que** des objets de voie environnants (5 à 13) sont détectés au moyen de capteurs (14) disposés sur le véhicule ferroviaire (1) et qu'une position actuelle du véhicule ferroviaire (1) est déterminée par un alignement des objets de voie détectés (5 à 13) avec les données de réseau.

7. Système pour la réalisation d'un procédé selon une des revendications 1 à 6, comprenant les composants de système suivants :

- une centrale de système (20) pour la gestion de données de réseau qui représentent un modèle (31) du réseau ferroviaire (4),
- un véhicule ferroviaire (1) avec un dispositif de navigation (19) pour le traitement de données de navigation dérivées des données de réseau,
- des moyens de communication (26) pour l'échange de données entre la centrale de système (20) et le dispositif de navigation (19),
- une plate-forme de support (1, 21, 22, 23, 24) avec des capteurs (14) pour la détection de données brutes qui représentent des informations caractéristiques du réseau ferroviaire (4),

dans lequel la centrale de système (20) est configurée pour générer des données d'objet (29) à partir des données brutes au moyen d'algorithmes de détermination,

**caractérisé en ce qu'**une infrastructure de mégadonnées (27) est configurée dans la centrale de système (20) pour associer lors d'une évaluation des données brutes et d'un alignement avec les données de réseau à chaque fois des valeurs de probabilité ou fonctions de probabilité aux données d'objet (29) en fonction des capteurs utilisés (14) et/ou de la plate-forme de support utilisée (1, 21, 22, 23, 24) et/ou des algorithmes de détermination utilisés.

8. Système selon la revendication 7, **caractérisé en ce qu'**une machine de pose de voie (1) est réalisée en tant que plate-forme de support et comprend un système de capteurs (14) qui collecte des données brutes pendant un parcours du réseau ferroviaire (4).

9. Système selon la revendication 7 ou 8, **caractérisé en ce que** le système comprend en tant que plate-forme de support un véhicule de mesure (21) ou un autre véhicule sur rails (22) équipé de capteurs (14).

10. Système selon une des revendications 7 à 9, **caractérisé en ce que** le système comprend une plate-forme de support volante (23), notamment un drone équipé de capteurs (14).

11. Système selon une des revendications 7 à 10, **caractérisé en ce que** les données de réseau sont mémorisées en tant que graphe avec des objets de voie (5 à 13) en tant que nœuds et avec des relations entre les objets de voie (5 à 13) en tant qu'arêtes.

## Fig. 1

EP 3 707 468 B1

## Fig. 2

Fig. 3

Fig. 4

Fig. 5

EP 3 707 468 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1862593 A2
- DE 102012215533 A1
- US 20140176711 A1
- US 20100004804 A1
- US 20140277814 A1